# FASCICULE DE BREVET EUROPEEN

(11) **EP 1 605 631 B1**
(45) Date de publication et mention de la délivrance du brevet: **31.05.2006**
(21) Numéro de dépôt: 04291431.7
(22) Date de dépôt: 08.06.2004
(51) Int. Cl.: H04L 12/26, H04L 12/56

(54) **Procédé et systéme de test d'un équipement de routage**
System und Verfahren zum Testen eines Routers
Method and system for testing a router

(43) Date de publication de la demande: 14.12.2005
(73) Titulaire: FRANCE TELECOM, 75015 Paris (FR)
(72) Inventeur: Capelle, Marc, 91380 Chilly Mazarin (FR); Chou, Sovatha, 77186 Noisiel (FR); Billaut, François, 75014 Paris (FR)
(74) Mandataire: Habasque, Etienne J. Jean-François

(56) Documents cités:
- US-A1- 2003 179 747
- US-B1- 6 728 214
- PATENT ABSTRACTS OF JAPAN vol. 2000, no. 09, 13 octobre 2000 (2000-10-13) & JP 2000 174795 A (NIPPON TELEGR & TELEPH CORP <NTT>), 23 juin 2000 (2000-06-23)

## Description

La présente invention concerne un procédé de test d'un équipement de routage dans un environnement de test isolé d'un réseau de télécommunication opérationnel, ainsi qu'un système de test.

Des campagnes de test sont souvent nécessaires avant l'installation d'un nouvel équipement de routage dans un réseau opérationnel, aussi bien lorsqu'il s'agit du remplacement d'un équipement que lorsqu'il s'agit de l'installation d'un nouvel équipement.

De manière classique, les équipements de routage à tester, également appelés « DUT » (en anglais : « Device Under Test »), sont le plus souvent placés dans un environnement de test isolé du réseau opérationnel et comprenant un nombre réduit d'autres équipements devant reproduire un réseau opérationnel le plus fidèlement possible. L'environnement ou système de test isolé permet d'effectuer des tests en prenant en compte la configuration au niveau matériel et au niveau logiciel du DUT ainsi que sa place dans la topologie du réseau opérationnel.

Les procédés et environnements de test classiques, permettent ainsi de tester la conformité protocolaire du DUT, c'est-à-dire sa conformité aux normes et standards en vigueur sur le réseau opérationnel et son interopérabilité, c'est-à-dire sa compatibilité avec les autres équipements déjà en place.

Les performances du DUT et notamment les performances protocolaires de la souche du constructeur, c'est-à-dire les performances du noyau logiciel du DUT, relatives à la gestion d'un protocole donné, ne sont testées que partiellement, l'environnement de test ne reflétant pas l'activité protocolaire réelle du réseau opérationnel.

L'augmentation rapide du trafic sur les réseaux de télécommunication ainsi que le développement de nouveaux protocoles de routage utilisant des fonctions avancées qui requièrent des capacités importantes, rendent de plus en plus critique une connaissance préalable des performances protocolaires pour un DUT. Le document US 67282141 divulgue un système selon le préambule de la revendication 10.

Le but de l'invention est de définir un procédé et un environnement ou système de test permettant d'obtenir un test efficace des performances protocolaires d'un équipement de routage.

A cet effet, la présente invention a pour objet le procédé défini par la revendication 1.

Ce procédé de test permet de tester l'équipement de routage dans une situation correspondant sensiblement à une situation dans un réseau opérationnel, de manière à obtenir un relevé significatif de ses performances protocolaires.

D'autres caractéristiques du procédé de l'invention sont définies dans les revendications dépendantes de la revendication 1.

L'invention concerne également un système de test d'un équipement de routage selon la revendication 11.

L'invention sera mieux comprise à la lecture de la description qui va suivre, donnée uniquement à titre d'exemple et faite en se référant aux dessins annexés, sur lesquels :
- la Fig.1 représente un schéma d'un réseau opérationnel sur lequel sont collectées des données ;
- la Fig.2 représente un organigramme du procédé selon l'invention ; et
- la Fig.3 représente le système de test selon l'invention.

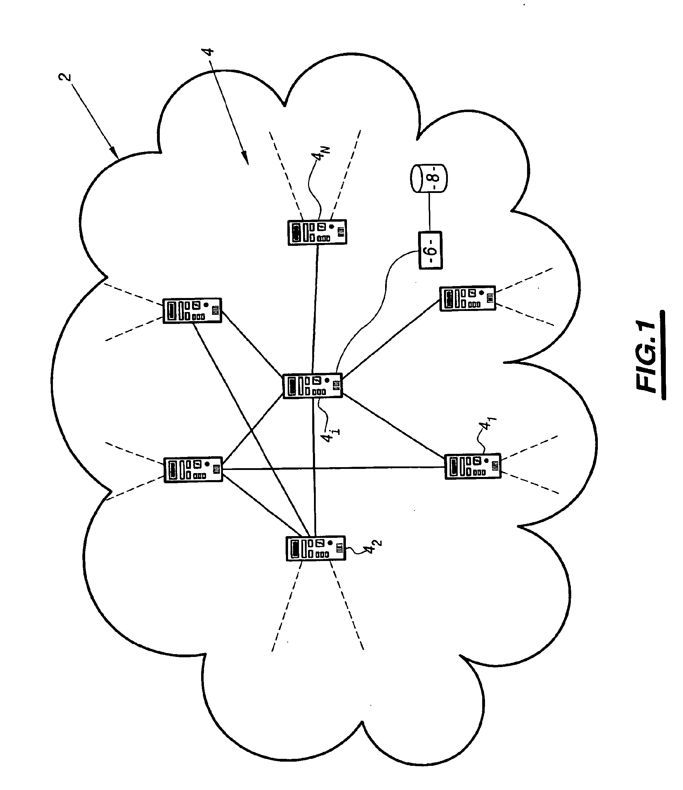

Le réseau de télécommunication opérationnel 2 représenté sur la figure 1 comprend un certain nombre d'équipements de routage, désignés de manière générale par la référence 4 et de manière particulière par les références 4₁ à 4_{N}.

Chaque équipement de routage 4 est relié à un nombre variable d'autres équipements de routage afin de déterminer des routes ou chemins de transfert d'informations.

Certains de ces équipements de routage sont des équipements adaptés pour gérer des protocoles de routage inter-domaine (en anglais « Exterior Gateway Protocol »), et/ou des protocoles de routage intra-domaine (en anglais « Interior Gateway Protocol »).

Le protocole BGP4 (en anglais : « Border Gateway Protocol », version 4) est un protocole de routage de la famille des protocoles de routage inter-domaine. Ce protocole est dit connecté, c'est-à-dire qu'il nécessite l'établissement de sessions entre les équipements de routage. Plus un réseau comporte d'équipements de routage et plus le nombre de sessions est important. Une optimisation apportée au protocole BGP4 consiste à ajouter la fonction de réflecteur de routes (en anglais : « Route Reflector ») à certains équipements qui servent de point d'entrée pour un certain nombre d'autres équipements afin de réduire le nombre de connexions. En conséquence, ces réflecteurs de routes sont des équipements critiques.

Dans le cadre du procédé de l'invention, des moyens 6 de collecte d'informations de routage véhiculées sur le réseau 2 sont reliés à un noeud formé par un équipement de routage donné 4ᵢ. Ces moyens de collecte 6 sont également reliés à une base de données 8.

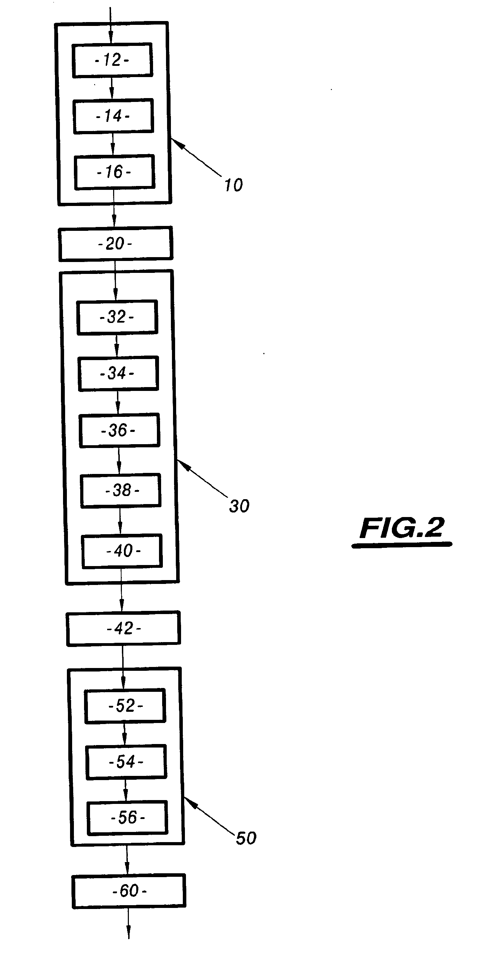

Dans le mode de réalisation décrit, les moyens de collecte de données 6 sont obtenus à l'aide d'un outil de supervision connu sous la dénomination commerciale « SCEPTRE » mettant en oeuvre un procédé d'observation d'un réseau de communication tel que défini dans la demande de brevet en France, publiée sous le numéro 2 834 848, le 18 juillet 2003. La mise en oeuvre de ce procédé sera décrite plus en détail en référence à la figure 2.

Sur la figure 2, on a représenté un organigramme du procédé de l'invention et plus particulièrement de la partie du procédé de test correspondant au test des performances protocolaires d'un équipement de routage dit « DUT » (en anglais : « Device Under Test »).

Le procédé décrit, correspond donc au test des performances d'un DUT par rapport à un protocole donné, les aspects de conformité aux normes en vigueur et d'interopérabilité avec les équipements déjà en place, ainsi que l'évolutivité du DUT, peuvent être testés par ailleurs au moyen de procédés connus, qui sont librement combinés avec le procédé de l'invention.

Dans le mode de réalisation décrit, le protocole retenu est le protocole BGP version 4 (en anglais « Border Gateway Protocol ») qui est un protocole de routage inter-domaine (en anglais : « Exterior Gateway Protocol ») dont une description complète peut être trouvée sur le site Internet de « Internet Engineering Task Force ».

Le protocole BGP4 est sélectionné en raison de son importante complexité, sa gestion nécessitant d'importantes ressources au niveau du calculateur et de la mémoire de l'équipement de routage.

Le procédé de l'invention débute par une étape 10 de collecte de données au niveau du noeud 4ᵢ du réseau opérationnel 2.

Cette étape 10 comporte une sous-étape 12 de positionnement des moyens de collecte 6 au noeud 4ᵢ, dont les caractéristiques sont similaires à celles de la position à laquelle est destiné le DUT, notamment en termes de charge de trafic.

Cette sous-étape 12 est suivie d'une sous-étape 14 de copie des paquets de données véhiculés sur le réseau opérationnel 2 au niveau du noeud 4ᵢ et d'une sous-étape 16 de sélection dans les paquets de données copiés, des paquets de données correspondant au protocole BGP4.

Différents modes de réalisation des sous-étapes 14 et 16 sont connus de l'état de la technique et notamment de la demande de brevet français publiée sous le n° 2 834 848, le 18 juillet 2003. En particulier dans cette demande telle que publiée, la partie s'étendant de la page 7, ligne 20 à la page 12, ligne 9, décrit un procédé de collecte d'informations sur un réseau dont le principe est exposé ci-après.

Tous les paquets de données qui doivent être traités par l'équipement de routage 4ᵢ passent par une unité de commande de cet équipement. Ils sont alors filtrés en fonction de critères prédéterminés et copiés lorsqu'ils répondent à ces critères, l'un de ces critères pouvant être la nature du protocole utilisé pour la transmission de ces données.

Les sous-étapes 14 et 16 permettent ainsi d'extraire du trafic sur le réseau 2, tous les paquets de données véhiculés selon le protocole BGP4, mais sans interférer avec le fonctionnement du réseau.

Les paquets de données conformes au protocole BGP4 sont détectés lors de leur traitement par l'équipement 4ᵢ et copiés sans être prélevés.

L'opération de collecte est donc transparente du point de vue du réseau 2.

A l'issue de l'étape 10, toutes les données véhiculées dans le réseau opérationnel 2 au niveau du noeud 4ᵢ et utilisant le protocole BGP, sont copiées par les moyens 6 de collecteur.

Avantageusement, la sous-étape 14 de copie permet également la copie d'informations d'horodatage associées à chaque paquet de données, de manière à pouvoir conserver la séquence temporelle des échanges de ces paquets de données entre les différents équipements du réseau opérationnel 2.

Ces paquets de données collectés sont ensuite mémorisés lors d'une étape 20 dans la base de données 8.

Dans le cas où, lors de la sous-étape 14, les informations d'horodatage ont également été copiées par les moyens de collecte 6, ces informations d'horodatage sont mémorisées dans la base de données 8.

Le procédé comporte ensuite une étape 30 de modification des paquets de données collectés.

Dans le mode de réalisation décrit, cette étape 30 comporte une sous-étape 32 de nettoyage des paquets de données, afin notamment de retirer certains champs d'exécution inutiles dans le cadre du test réalisé, tels que par exemple, pour un test de performance protocolaire pour le protocole BGP4, les champs dits « Withdrawn » ou les attributs dits « MP-UNREACH-NLRI ».

L'étape 30 de modification comprend une sous-étape 34 de remplacement, dans les paquets de données collectés, des données d'identification des émetteurs et destinataires d'origine des paquets, par des données d'identification d'émetteurs et de destinataires de l'environnement de test.

En effet, dans le réseau opérationnel 2, un nombre important d'équipements intervient entraînant de ce fait, une multiplication des émetteurs et des destinataires de paquets qui n'est pas reproductible dans le cadre de l'environnement de test.

Cette sous-étape 34 de remplacement correspond, par exemple, au regroupement de plusieurs identifications de destinataires et d'émetteurs d'origine sur chaque identifiant de destinataire et d'émetteur de l'environnement de test.

Plus particulièrement, dans le cadre du protocole BGP4, cette sous-étape 44 correspond au regroupement des paquets dits « BGP-UPDATE » en fonction de l'émetteur du paquet, en utilisant des attributs « ORIGINATOR-ID » et/ou « NEXT-HOP » comme discriminant.

Avantageusement, l'étape 30 de modification comporte également d'autres sous-étapes de modification des paquets de données collectés pour simuler différentes situations. Par exemple, l'étape 30 comporte une sous-étape 36 de modification du contenu des attributs des fonctions présentes dans les paquets de données, afin d'avoir des paquets de données comportant ces différentes fonctions dans un maximum de situations différentes.

Dans le cadre du protocole BGP4, les attributs dont les valeurs sont modifiées au cours de cette sous-étape 36, sont par exemple les attributs dits « AS-PATH », « NEXT-HOP » et « CLUSTER-LIST ».

Dans le mode de réalisation décrit, l'étape 30 de modification comprend également une sous-étape 38 d'ajout de paquets de données afin d'introduire des éléments supplémentaires par rapport aux paquets de données collectés sur le réseau opérationnel 2, tels que par exemple, des paquets de données émanant d'équipements supplémentaires virtuels.

Enfin, l'étape 30 comporte une sous-étape 40 de modification des informations d'horodatage des paquets de données, pour modifier la séquence temporelle de transmission de ces paquets de données, afin de l'accélérer ou de la ralentir.

A l'issue de l'étape 30, le procédé délivre donc des paquets de données collectés sur le réseau opérationnel 2 et modifiés afin d'être configurés pour l'environnement de test et avantageusement pour couvrir une large gamme d'évènements protocolaires.

Les paquets de données collectés et modifiés sont ensuite mémorisés dans la base de données 8 lors d'une étape 42.

Le procédé comporte ensuite une étape 50 de test de l'équipement de routage DUT.

Dans le mode de réalisation décrit, cette étape 50 de test débute par une sous-étape 52 de configuration de l'environnement de test.

En effet, le protocole BGP4 est un protocole dit « connecté », les différents destinataires et émetteurs devant communiquer à l'intérieur de sessions ouvertes entre un émetteur et un destinataire identifiés au travers d'un équipement de routage.

Au cours de cette sous-étape 52, il est donc nécessaire de mettre en place des sessions entre les différents équipements de l'environnement de test afin de créer la topologie de test en permettant à chaque équipement de remplir plusieurs fonctions d'émission et de réception.

La sous-étape 52 est suivie d'une sous-étape 54 de répartition des paquets de données collectés et modifiés entre les différents équipements de l'environnement de test, chaque paquet de données étant attribué à son émetteur tel que défini à l'issue de la sous-étape 34.

Enfin, l'étape 50 comporte une sous-étape 56 de routage des paquets de données collectés modifiés, par l'équipement DUT dans l'environnement isolé de test.

Cette sous-étape 56 correspond à l'exécution par chacun des équipements de la transmission des différents paquets de données en fonction des informations de destinataire et avantageusement d'horodatage associées. Cette sous-étape 56 permet ainsi de mettre le DUT dans une situation de test représentative d'une situation réelle. Avantageusement, la situation à laquelle le DUT est exposé a été modifiée afin de couvrir un important nombre de fonctions, et un éventuel accroissement de la charge du trafic réseau, de manière à pouvoir évaluer les performances protocolaires du DUT par rapport à un noeud du réseau, en fonction de la charge actuelle et réelle de ce noeud et également en fonction d'une charge modifiée par rapport à la situation actuelle.

Enfin, le procédé de l'invention comporte une étape 60 de collecte de données de mesure des performances protocolaires du DUT, réalisée de manière classique pour déterminer notamment l'occupation des mémoires, la charge de l'unité de calcul, le temps de convergence et d'autres caractéristiques du DUT.

Un tel procédé de test est particulièrement adapté à des équipements de routage destinés à assurer une fonction de réflecteur de routes dans le protocole BGP4. En effet, ces équipements servent de point d'entrée à plusieurs équipements de routage et occupent une place stratégique dans la topologie BGP4 du réseau, de sorte que leurs performances protocolaires sont critiques.

Un tel procédé est également approprié pour tester des routeurs amenés à gérer un nombre de routes importantes, tels que les routeurs utilisant une extension de type dit « MP-BGP », du fait de l'évolution importante du nombre de routes de type VPN-IPv4.

Bien entendu, d'autres variantes de l'invention sont également possibles.

Notamment l'invention peut être appliquée à d'autres protocoles, tels que des protocoles dits « IGP » ou « MULTICAST », et notamment à des protocoles non connectés dits « protocoles de BROADCAST » permettant l'émission et la réception d'informations indépendamment de l'établissement préalable de sessions, de sorte que, dans un tel mode de réalisation, la sous-étape 52 n'est pas réalisée.

Dans le cas où le DUT est destiné à remplacer un équipement existant, l'étape de collecte 10 est réalisée directement sur l'équipement à remplacer. Dans le cas d'une extension du réseau, le noeud de collecte est sélectionné lors de la sous-étape 12 de façon à être représentatif de la charge future de l'équipement.

Par ailleurs, l'étape de collecte 10 peut être réalisée sur un ou plusieurs protocoles et éventuellement sur l'intégralité des paquets de données protocolaires véhiculés sur le réseau, les sous-étapes 14 et 16 étant adaptées en conséquence.

Par ailleurs, d'autres moyens de collecte que ceux décrits peuvent être utilisés et leur exécution peut mettre en oeuvre différents types d'équipements et de protocoles.

Dans une variante, les données collectées lors de l'étape 10 sont directement traitées en temps réel, rendant inutiles les étapes 20 et 42 de mémorisation intermédiaires.

En fonction du ou des protocoles sélectionnés, l'étape 30 de traitement peut comporter des sous-étapes supplémentaires ou ne pas comporter toutes les sous-étapes décrites.

Notamment, chacune des sous-étapes 32 de nettoyage, 36 de modification, 38 d'ajout et 40 de modification des informations d'horodatage, peut être supprimée sans influer sur l'efficacité et la mise en oeuvre du procédé.

Dans une variante, le test porte sur l'exécution par le DUT d'une fonction donnée, de sorte que cette exécution ou non-exécution constitue le résultat du test, et se traduit par exemple par l'arrêt du DUT, rendant ainsi inutile l'étape 60.

Enfin, dans une autre variante, l'environnement isolé de test comporte un nombre limité d'équipements reliés au DUT et chargés de transmettre les paquets de données, de sorte que la sous-étape 54 peut être supprimée.

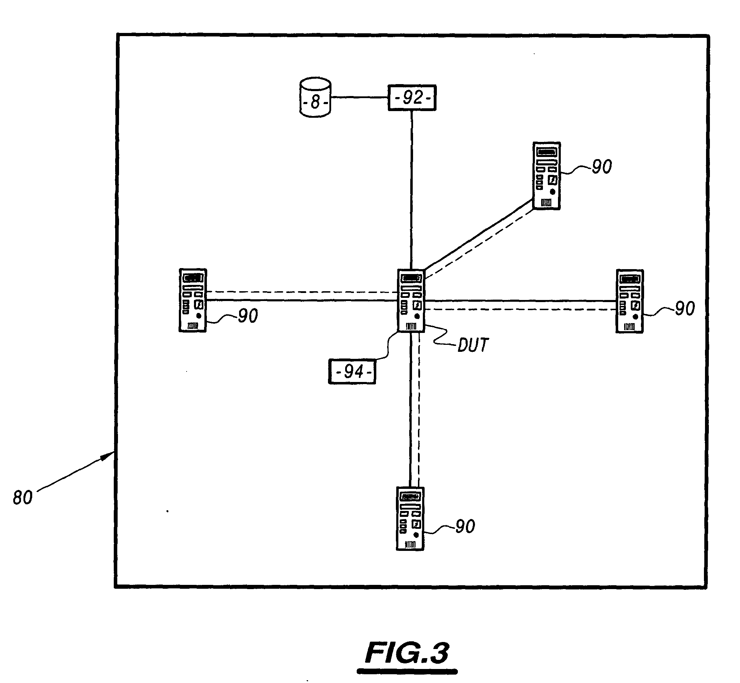

Sur la figure 3, on a représenté un système de test 80 sur lequel est mis en oeuvre le procédé de l'invention.

Ce système d'environnement de test 80 comprend l'équipement de routage à tester, noté DUT auquel est relié un nombre déterminé d'équipements 90 de simulation d'un réseau. Chaque équipement 90 est relié au DUT par une liaison physique et une ou plusieurs liaisons virtuelles.

Notamment, dans le cadre des tests de performances protocolaires effectués sur le protocole BGP4, chaque équipement 90 est relié par plusieurs liaisons virtuelles avec le DUT, chaque liaison virtuelle correspondant à une session ouverte entre un équipement 90 et le DUT.

L'ensemble des équipements 90 et du DUT forment ainsi un réseau dont la topologie est réduite mais permet de servir de support à la simulation du réseau opérationnel 2.

L'ensemble des équipements 90 et du DUT sont contrôlés par une unité de commande 92 chargée de déterminer les fonctions et attributions respectives, l'unité de commande est reliée à la base de données 8 contenant les paquets de données collectés et modifiés, utilisés pour simuler l'activité du réseau opérationnel 2.

Enfin, le DUT est connecté à des moyens 94 de mesure de ces performances protocolaires, réalisés de manière classique.

En fonctionnement, l'unité de commande 92 assure la configuration du réseau de l'environnement de test 80 par la mise en oeuvre de l'étape 52, afin de créer les liaisons virtuelles entre le DUT et les équipements 90, nécessaires au support des sessions BGP4. L'unité de commande 92 utilise ensuite les paquets de données de la base de données 8 correspondant aux paquets de données collectés selon l'étape 10 du procédé de l'invention et modifiés selon l'étape 30.

Les paquets de données sont répartis entre les différents équipements 90, de sorte que chaque équipement dispose de tous les paquets de données qu'il doit émettre vers d'autres équipements 90 au travers du DUT. Cette répartition correspond à la mise en oeuvre de l'étape 54 du procédé de l'invention.

Enfin, l'unité de commande 92 initie l'étape 56 de routage des paquets de données par le DUT, en commandant l'exécution par chacun des équipements 90 de l'émission des paquets de données qui lui ont été attribués.

Au cours de toute cette phase de fonctionnement, les moyens de mesure 94 effectuent des relevés de performances du DUT selon l'étape 60.

Bien entendu, différentes variantes d'architectures peuvent être envisagées. Notamment, chacun des équipements 90 peut avoir un accès direct à la base de données 8, pour extraire de celles-ci les paquets de données qu'il est supposé émettre.

## Revendications

1. Procédé de test d'un équipement de routage (DUT) dans un environnement de test isolé d'un réseau de télécommunication opérationnel (2), **caractérisé en ce qu'**il comporte :
- une étape (10) de collecte de paquets de données sur un noeud (4ᵢ) dudit réseau opérationnel (2), comprenant au moins une sous-étape (14) de copie de paquets de données véhiculés ;
- une étape (30) de modification des paquets de données collectés comprenant au moins une sous-étape (36) de remplacement de données d'identification des émetteurs et destinataires d'origine des paquets collectés par des données d'identification d'émetteurs et de destinataires de l'environnement de test; et
- une étape (50) de test de l'équipement de routage (DUT) comprenant au moins une sous-étape (56) de routage des paquets de données modifiés par ledit équipement (DUT) dans ledit environnement de test.

2. Procédé selon la revendication 1, **caractérisé en ce que** ladite étape (10) de collecte comprend une sous-étape (12) de positionnement de moyens de collecte (6) au niveau d'un noeud (4ᵢ) dudit réseau opérationnel (2), dont les caractéristiques sont similaires à celles de la future position de l'équipement de routage (DUT).

3. Procédé selon l'une quelconque des revendications 1 et 2, **caractérisé en ce que** ladite étape (10) de collecte comprend une sous-étape (16) de sélection dans les paquets de données copiés, des paquets de données correspondant à un ou plusieurs protocoles déterminés.

4. Procédé selon l'une quelconque des revendications 1 à 3, **caractérisé en ce que** ladite sous-étape (14) de copie comprend la copie d'informations d'horodatage associées auxdits paquets de données copiés.

5. Procédé selon la revendication 4, **caractérisé en ce que** ladite étape (30) de modification comprend une sous-étape (40) de modification de données d'horodatage associées auxdits paquets de données.

6. Procédé selon l'une quelconque des revendications 1 à 5, **caractérisé en ce que** ladite étape (30) de modification comprend au moins une sous-étape sélectionnée dans le groupe formé :
- d'une sous-étape (32) consistant à retirer des paquets de données collectés des champs d'éxécutions qui sont inutiles dans le cadre du test réalisé ;
- d'une sous-étape (34) de modification de paramètres de paquets collectés ; et
- d'une sous-étape (36) d'ajout de paramètres aux paquets de données collectés.

7. Procédé selon l'une quelconque des revendications 1 à 6, **caractérisé en ce que** ladite étape de test (50) comporte une sous-étape (52) de configuration de l'environnement de test pour en déterminer la topologie réseau.

8. Procédé selon l'une quelconque des revendications 1 à 7, **caractérisé en ce que** ladite étape (50) de test comprend une sous-étape (54) de répartition des paquets de données collectés et modifiés entre différents équipements de simulation (90) de l'environnement de test (80) préalablement à ladite sous-étape (56) de routage des paquets par ledit équipement de routage (DUT).

9. Procédé selon l'une quelconque des revendications 1 à 8, **caractérisé en ce qu'**il comprend une étape (60) de mesure des performances de l'équipement de routage (DUT) au cours de ladite étape de test (50).

10. Système de test (80) isolé d'un réseau de télécommunication opérationnel (2), du type comportant un ou plusieurs équipements de simulation (90) reliés à un équipement de routage à tester (DUT), une base de données (8) contenant des paquets de données de test et une unité de commande (92) apte à commander le routage par le ou lesdits équipements de simulation (90), des paquets de données de ladite base de données (8) au travers dudit équipement de routage (DUT), **caractérisé en ce que** ladite base de données contient des paquets de données collectés sur un noeud (4ᵢ) d'un réseau opérationnel (2) et modifiés afin de remplacer des données d'identification des émetteurs et destinataires d'origine des paquets de données collectés par des données d'identification d'émetteurs et de destinataires de l'environnement de test (80).

11. Système selon la revendication 10, **caractérisé en ce qu'**il est adapté pour mettre en oeuvre un procédé de test selon l'une quelconque des revendications 1 à 9.

## Claims

1. Method for testing a router (DUT) in a test environment isolated from an operational telecommunications network (2), **characterized in that** it comprises:
- a step (10) of collecting data packets from a node (4ᵢ) of said operational network (2), comprising at least one substep (14) of copying data packets being conveyed;
- a step (30) of modifying the collected data packets, comprising at least one substep (36) of replacing identification data of the original senders and receivers of the collected packets with identification data of senders and receivers in the test environment; and
- a step (50) of testing the router (DUT) comprising at least one substep (56) of routing modified data packets via said router (DUT) in said test environment.

2. Method according to Claim 1, **characterized in that** said collecting step (10) includes a substep (12) of positioning collecting means (6) at a node (4ᵢ) of said operational network (2) having characteristics that are similar to those of the future position of the router (DUT) .

3. Method according to either of Claims 1 and 2, **characterized in that** said collecting step (10) includes a substep (16) of selecting from the copied data packets, which data packets correspond to one or more determined protocols.

4. Method according to any one of Claims 1 to 3, **characterized in that** said copying substep (14) includes copying time and date information associated with said copied data packets.

5. Method according to Claim 4, **characterized in that** said modifying step (30) includes a substep (40) of modifying the time and date data associated with said data packets.

6. Method according to any of Claims 1 to 5, **characterized in that** said modifying step (30) comprises at least one substep selected from the group formed by:
- a substep (32) consisting in removing from the collected data packets execution fields that are not required in the context of the test being performed;
- a substep (34) of modifying parameters of collected packets; and
- a substep (36) of adding parameters to the collected data packets.

7. Method according to any one of Claims 1 to 6, **characterized in that** said testing step (50) includes a substep (52) of configuring the test environment to determine therefrom the network topology.

8. Method according to any one of Claims 1 to 7, **characterized in that** said testing step (50) includes a substep (54) of distributing the collected and modified data packets between various items of equipment for simulating (90) the test environment (80) prior to said substep (56) of routing packets via said router (DUT).

9. Method according to any one of Claims 1 to 8, **characterized in that** it includes a step (60) of measuring the performance of the router (DUT) during said testing step (50).

10. Test system (80) isolated from an operational telecommunications network (2), the system being of the type comprising one or more simulators (90) connected to a router to be tested (DUT), a database (8) containing test data packets, and a control unit (92) suitable for controlling routing by said simulators (90) of data packets from said database (8) through said router (DUT), **characterized in that** said database contains data packets collected from a node (4ᵢ) of an operational network (2) and modified in order to replace identification data of the original senders and receivers of the data packets collected with identification data of senders and receivers in the test environment (80).

11. System according to Claim 10, **characterized in that** it is adapted to implement a test method according to any one of Claims 1 to 9.

## Patentansprüche

1. Verfahren zum Test einer Routingeinrichtung (DUT) in einer von einem operationellen Telekommunikationsnetz (2) isolierten Testumgebung, **dadurch gekennzeichnet, dass** es Folgendes aufweist:
- einen Schritt (10) des Sammelns von Datenpaketen an einem Knoten (4ᵢ) des operationellen Netzes (2), der mindestens einen Unterschritt (14) des Kopierens von übertragenen Datenpaketen enthält;
- einen Schritt (30) der Veränderung der gesammelten Datenpakete, der mindestens einen Unterschritt (36) des Ersetzens von Identifikationsdaten der ursprünglichen Sender und Empfänger der gesammelten Pakete durch Identifikationsdaten von Sendern und Empfängern der Testumgebung enthält; und
- einen Schritt (50) des Tests der Routingeinrichtung (DUT), der mindestens einen Unterschritt (56) des Routens der veränderten Datenpakete durch die Einrichtung (DUT) in der Testumgebung enthält.

2. Verfahren nach Anspruch 1, **dadurch gekennzeichnet, dass** der Schritt (10) des Sammelns einen Unterschritt (12) der Positionierung von Sammelmitteln (6) in Höhe eines Knotens (4ᵢ) des operationellen Netzes (2) enthält, deren Eigenschaften ähnlich denen der zukünftigen Position der Routingeinrichtung (DUT) sind.

3. Verfahren nach einem der Ansprüche 1 und 2, **dadurch gekennzeichnet, dass** der Sammelschritt (10) einen Unterschritt (16) der Auswahl der Datenpakete aus den kopierten Datenpaketen enthält, die einem oder mehreren bestimmten Protokollen entsprechen.

4. Verfahren nach einem der Ansprüche 1 bis 3, **dadurch gekennzeichnet, dass** der Kopier-Unterschritt (14) das Kopieren von Zeit- und Datumsangabeinformationen enthält, die den kopierten Datenpaketen zugeordnet sind.

5. Verfahren nach Anspruch 4, **dadurch gekennzeichnet, dass** der Schritt (30) der Veränderung einen Unterschritt (40) der Veränderung von den Datenpaketen zugeordneten Zeit- und Datumsangabedaten enthält.

6. Verfahren nach einem der Ansprüche 1 bis 5, **dadurch gekennzeichnet, dass** der Schritt (30) der Veränderung mindestens einen Unterschritt enthält, der aus der Gruppe ausgewählt wird, die gebildet wird von:
- einem Unterschritt (32), der darin besteht, aus den gesammelten Datenpaketen Felder von Ausführungen zu entfernen, die im Rahmen des durchgeführten Tests unnötig sind,
- einem Unterschritt (34) der Veränderung von Parametern von gesammelten Paketen; und
- einem Unterschritt (36) des Hinzufügens von Parametern zu den gesammelten Datenpaketen.

7. Verfahren nach einem der Ansprüche 1 bis 6, **dadurch gekennzeichnet, dass** der Testschritt (50) einen Unterschritt (52) der Konfiguration der Testumgebung aufweist, um deren Netztopologie zu bestimmen.

8. Verfahren nach einem der Ansprüche 1 bis 7, **dadurch gekennzeichnet, dass** der Testschritt (50) einen Unterschritt (54) der Verteilung der gesammelten und veränderten Datenpakete zwischen verschiedenen Simulationseinrichtungen (90) der Testumgebung (80) vor dem Unterschritt (56) des Routens der Pakete durch die Routingeinrichtung (DUT) aufweist.

9. Verfahren nach einem der Ansprüche 1 bis 8, **dadurch gekennzeichnet, dass** es einen Schritt (60) der Messung der Leistungen der Routingeinrichtung (DUT) während des Testschritts (50) aufweist.

10. Testsystem (80), das von einem operationellen Telekommunikationsnetz (2) isoliert ist, von der Art, die mehrere Simulationseinrichtungen (90), die mit einer zu testenden Routingeinrichtung (DUT) verbunden sind, eine Datenbasis (8), die Testdatenpakete enthält, und eine Steuereinheit (92) aufweist, die in der Lage ist, durch die Simulationseinrichtung(en) (90) das Routen der Datenpakete der Datenbasis (8) über die Routingeinrichtung (DUT) zu steuern, **dadurch gekennzeichnet, dass** die Datenbasis Datenpakete enthält, die an einem Knoten (4ᵢ) eines operationellen Netzes (2) gesammelt und verändert wurden, um Identifikationsdaten der ursprünglichen Sender und Empfänger der gesammelten Datenpakete durch Identifikationsdaten von Sendern und Empfängern der Testumgebung (80) zu ersetzen.

11. System nach Anspruch 10, **dadurch gekennzeichnet, dass** es ausgelegt ist, um ein Testverfahren nach einem der Ansprüche 1 bis 9 durchzuführen.
